# EUROPEAN PATENT SPECIFICATION

(11) **EP 1 018 279 B1**
(45) Date of publication and mention of the grant of the patent: **02.01.2003**
(21) Application number: 98940683.0
(22) Date of filing: 26.08.1998
(51) Int. Cl.: H04Q 7/38, H04Q 3/00, H04Q 3/66

(54) **METHOD AND SYSTEM FOR PROCESSING CALLS**
VERFAHREN UND VORRICHTUNG ZUR VERARBEITUNG VON ANRUFEN
PROCEDE ET SYSTEME DE TRAITEMENT D'APPELS

(30) Priority: 27.08.1997 NL 1006862
(43) Date of publication of application: 12.07.2000
(73) Proprietor: Libertel Netwerk B.V., 6221 KX Maastricht (NL)
(72) Inventor: OP DEN CAMP, Rudi, Hubertus, Carolus, Margaretha, NL-6163 MA Geleen (NL); BOS, Willem, NL-6163 MA Geleen (NL)
(74) Representative: Ottevangers, Sietse Ulbe
(86) International application number: NL9800480
(87) International publication number: WO99011087

(56) References cited:
- EP-A- 0 708 570
- EP-A- 0 740 483
- EP-A- 0 854 656
- EP-A- 0 868 096
- WO-A-95/12268
- WO-A-97/33441
- WO-A-97/36451
- DE-A- 19 709 713
- US-A- 5 475 749
- US-A- 5 625 681
- US-A- 5 881 145
- BISHOP T: "FREEING THE NETWORK FOR COMPETITION" TELECOMMUNICATIONS, vol. 29, no. 4, April 1995, page 75, 77-78, 80 XP002037911

## Description

This invention relates to a method for processing calls for mobile communication equipment with a subscriber number ported from a first mobile communication network of a first operator to a second mobile communication network of a second operator. This invention further relates to a communication system comprising a first mobile communication network provided with at least one location register, a number of exchanges and mobile communication equipment provided with subscriber numbers, including subscriber numbers belonging to the first mobile communication network and subscriber numbers belonging to other mobile communication networks than the first mobile communication network.

If a telephone subscriber has a choice between more than one provider of telephone services, hereinafter called operator, there is also a possibility for the subscriber to switch from one operator to another. It would be objectionable for the subscriber if such a switch were to entail cancellation of the old subscriber number and assignment of a new subscriber number. The authorities, too, with a view to as much freedom of competition as possible, object to such a procedure, since it might inhibit the subscriber from switching operators.

Accordingly, there exists a need for a method which allows the subscriber to retain the original telephone number, even if he switches operators. In the fixed telephony network, it is relatively simple to create possibilities for retaining the number, because the subscriber apparatus is always at the same location and is always connected to the same telephone exchange. In mobile telephony networks, however, this is not the case. The subscriber, with his mobile telephone, may be in a great many locations removed far apart and is difficult to trace if, for instance, he has a subscriber number that was originally provided by another operator. In addition, obviously, the costs and proceeds of mobile telephone traffic should be ascribed to the correct operators.

The object of the invention is to provide for the need outlined and generally to provide a method which routes telephone calls efficiently from or to mobile telephones with a number transferred from one operator to another. Such a number will hereinafter be referred to as 'ported' number.

According to the invention, in the method for processing calls for mobile communication equipment with subscriber numbers including subscriber numbers ported from a first mobile communication network for mobile communication of a first operator to a second mobile communication network for mobile communication of a second operator, wherein each mobile communication network (I,II) comprises at least one location register (HLR1, HLR2, HLR') and wherein in each mobile communication network (I,II) a database of ported numbers, ported in or ported out, is formed, which is accessible from at least one gateway exchange (11,11'), and in which the subscriber numbers ported from one operator to another operator are stored together with information about the network (I,II) to which the subscriber numbers belong wherein upon an incoming call at the network (I,II) for a particular subscriber number, the called subscriber number is compared with the subscriber numbers in the database and on the basis of the result of that comparison, routing information for the further processing of the call is composed, wherein such routing information is used to access the location register wherein information of the called subscriber number is stored.

Publication 'Freeing the Network for Competition', Tim Bishop, Telecommunications, vol. 29, no. 4, April 1995, pp. 75, 77-78 and 80, refers to the possibility of number portability for fixed networks and not to mobile networks.

European-A-0 708 570 also relates to a fixed network with local and national databases in several switches. These databases include information about all telephone numbers of the region which is served by the belonging switches. These are, however, not databases comprising any ported numbers.

US-A-5 625 681 also refers to a fixed communication network wherein ported subscriber numbers are stored in a memory SCP together with a belonging provided number. The provider number corresponds with the physical connection of the called subscriber which has moved to another place together with his original subscribed number. Hence, US patent 5 625 681 relates to a geographical number portability for a fixed network.

A communication system according to the invention comprises a first mobile communication network provided with at least one location register, a number of exchanges and mobile communication equipment provided with subscriber numbers, including subscriber numbers belonging to the first mobile communication network and subscriber numbers belonging to other mobile communication networks than the first networks, wherein the first mobile communication network comprises at least one memory device, which is accessible from at least one gateway exchange and which contains a database of ported numbers, ported in or ported out, in which the subscriber numbers ported from one operator to another operator are stored together with information about the mobile communication networks to which the subscriber numbers belong, and that the gateway exchange is arranged to compare a called subscriber number with the database of ported numbers and, depending on the result of the comparison, to determine whether the call is intended for a subscriber number belonging to the first mobile communication network or one of said other mobile communication networks, wherein the memory device is arranged, in the case of a subscriber number belonging to the first mobile communication network, to furnish to the gateway exchange the address of a location register relevant to the subscriber number, and wherein the memory device is further arranged, in the case of a subscriber number belonging to one of said other mobile communication networks, to form a temporary number which indicates by which other communication network the subscriber number is operated.

Hereinafter, the invention will be further described with reference to the accompanying drawings.
Fig. 1 schematically shows the problem to which the invention provides a solution
Fig. 2 schematically illustrates how a mobile telephone call is normally routed to the correct subscriber number within a telephony network;
Fig. 3 schematically shows an example of a telephony network according to the invention, coupled to a similar, second network of another operator;
Fig. 4 schematically shows a variant, with a routing enquiry originating from a foreign exchange;
Fig. 5 schematically shows a second variant, with a routing enquiry originating from a foreign exchange and involving a switched subscriber;
Fig. 6 shows an example of a flow diagram of the operation of a special memory device for use in a method according to the invention; and
Fig. 7 shows a modification of Fig. 6.

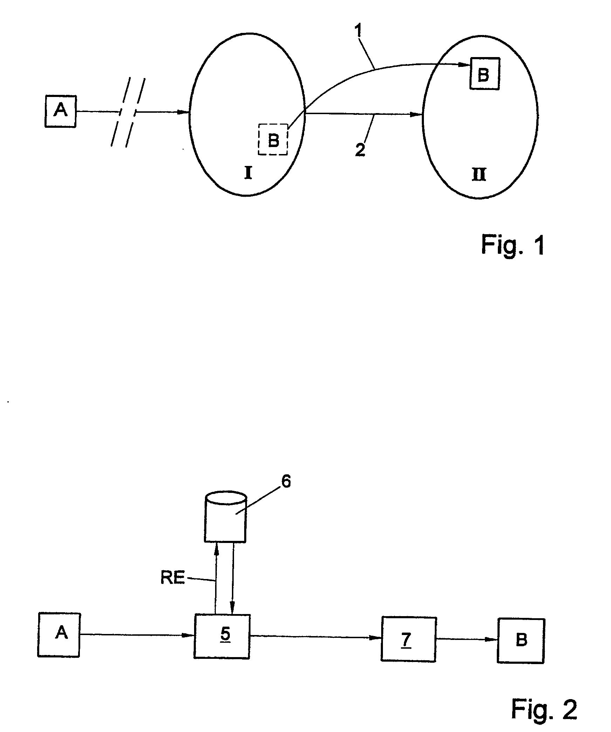

Fig. 1 schematically illustrates the problem to which the invention provides a solution. A call transmitted by subscriber A from a fixed or mobile telephone apparatus, intended for mobile subscriber apparatus B, reaches telephone network I of a first operator via one of the existing paths for that purpose. The reason that the call reaches the network I is that subscriber A has dialled a mobile telephone number which, as appears from a particular characterizing part of the number, belongs to the number database of network I. Thus, for instance, a mobile telephone number starting with 06 53 belongs to the database of PTT Telecom, while 06 54 belongs to the Libertel database.

Accordingly, in the above-described situation, subscriber A, or anyone processing his call, expects that subscriber B is to be found in the network I. However, if subscriber B, while maintaining the original mobile telephone number, has switched to another operator, who manages network II, as indicated with an arrow 1, special measures are required to establish nonetheless a connection with subscriber B, even though that subscriber number B now belongs to the database of network II. The call coming in at network I must therefore be transmitted directly (arrow 2) or indirectly to network II. To that end, it should be possible to detect in network I that subscriber B no longer belongs to the database of network I and also to which other operator subscriber B has switched.

Fig. 2, for clarification, first illustrates how a connection with a mobile telephone apparatus is normally established. A call from subscriber A, intended for mobile subscriber B, comes in at a telephone exchange 5 (the gateway exchange, usually indicated by the abbreviation GMSC (Gateway Mobile Switching Centre). It is assumed that subscriber B has a telephone number that is not a ported number and with which, accordingly, contact can in fact be established in the network to which the telephone exchange 5 belongs. However, it is not possible simply to establish direct contact with subscriber B on the basis of the number of subscriber B as selected by subscriber A, since subscriber B has a mobile apparatus and should therefore be traced first. To that end, the exchange 5 transmits a routing enquiry, that is, a request for route information, to a special location register 6, usually designated by the abbreviation HLR (= Home Location Register). The routing enquiry is indicated symbolically with an arrow RE (Routing Enquiry).

The location register contains information about the place where the called subscriber, at any rate his mobile telephone apparatus, is located. That information is available for all mobile telephones that have not been set out of service, in that each mobile telephone transmits a presence signal at predetermined intervals (18 minutes at present), which contains information about the identity of the apparatus, or the subscriber, and is received by a receiver belonging to the network. Since the location of all receivers is known, it is also known in what area the telephone is located and via which exchange subscriber B can be reached. This information is transmitted to the location register. Obviously, it is possible that the telephone is located entirely outside the reach of the network. In that case, (temporarily) no contact with the telephone is possible.

The location register accordingly contains information about the location of the called telephone in the form of the address of the host exchange 7 which, at that time, operates the mobile telephone of subscriber B to be traced. The location register asks the host exchange 7 for a temporary number ("roaming number" RN), and this number is passed on by the location register to the gateway exchange (GMSC) 5. The gateway exchange 5 finally routes the call to the subscriber apparatus B in the normal manner.

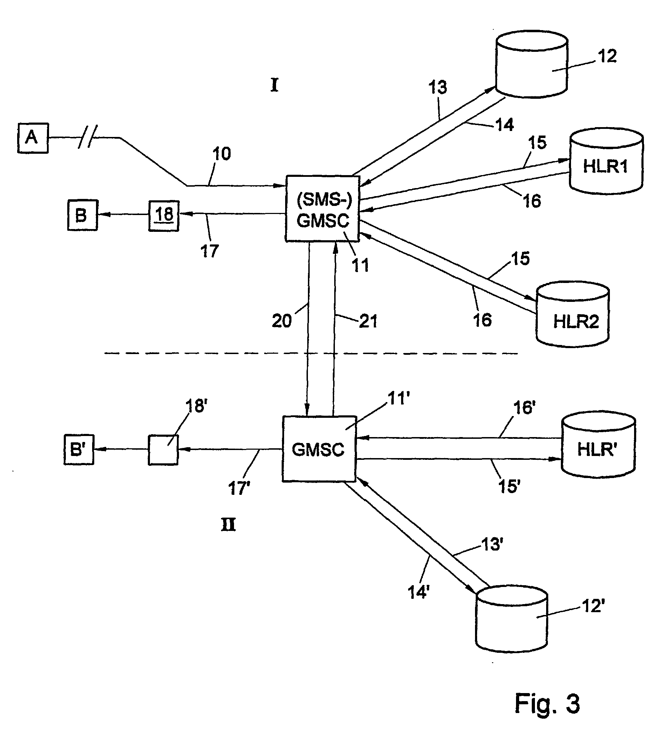

Fig. 3 schematically illustrates an example of a manner in which, according to the invention, a connection can be established with a mobile telephone apparatus with a ported number.

A call, indicated by arrow 10, intended for a mobile telephone, reaches, directly or indirectly, a gateway exchange (GMSC) for mobile telephony 11 of, for instance, GSM network I. Then a routing enquiry signal is composed and sent to a special memory device 12 via connection 13. The memory device 12, also referred to as signalling relay or N(umber) P(ortability) signalling relay, contains information about all ported numbers, whether ported in or ported out, and the associated operators and networks, respectively. As address for the routing enquiry signal, the number of the mobile telephone being traced can be advantageously used. If the target number is a number of the network I itself or a ported-in number, the memory device 12 sends a signal back via connection 14. This signal contains information about a location register. Usually, a network for mobile telephony contains more than one location register, but each location register contains information about specific series of numbers. The memory device 12 knows what location register contains information about a particular mobile telephone number. In the example shown, two location registers HLR1 and HLR2 are represented. Each location register has a specific address number and the memory device 12 adds this number to the routing enquiry signal, so that the exchange 11 can send this signal to the correct location register via connection 15. The location register, HLR1 or HLR2 in this example, then proceeds to compose a temporary number ("roaming number"), which corresponds with the mobile apparatus being searched for. The temporary number contains *inter alia* the number ("global title" or "point code") of the host exchange and is transmitted via connection 16 to the gateway exchange 11, which provides for a connection 17 with the host exchange 18. The host exchange 18, finally, can establish the connection with the target apparatus B.

In the case where the called subscriber is operated by another network of another operator, the memory device 12 itself forms a temporary number, which may consist, for instance, of the mobile ISDN number of the called subscriber, preceded by a so-called prefix, which indicates by which network the called subscriber is operated. The temporary number thus formed is returned via connection 14 to the gateway exchange 11. The exchange 11 recognizes the prefix and transmits the temporary number to the associated network II via an internetwork connection 20. Similarly, the exchange 11 can receive signals via the internetwork connection 21 from network II, which is built up similarly to network I. Corresponding parts of network II are indicated by the same numerals as in network I, but primed.

Depending on the arrangements made, the prefix can or cannot be ported to the other network. Then, in network II, in a similar manner to that described hereinabove, using a memory device 12' and a location register HLR', a connection with the relevant host exchange 18' and subsequently with the called mobile telephone B' can be established.

In the practice of the method described, number portability (transfer of subscriber numbers from one operator to the other) can be realized in a simple manner. Additional connections between the different networks are not needed. Obviously, every participating network *does* need to have the special memory device 12 or 12', which can indicate either the relevant location register or the relevant other network.

It is noted that a similar method is applicable in facsimile and data transmission. Further, a method according to the invention is applicable for routing enquiries originating from another network (SOR - Support of Optimal Routing) and for so-called SMS (Short Message Service) messages.

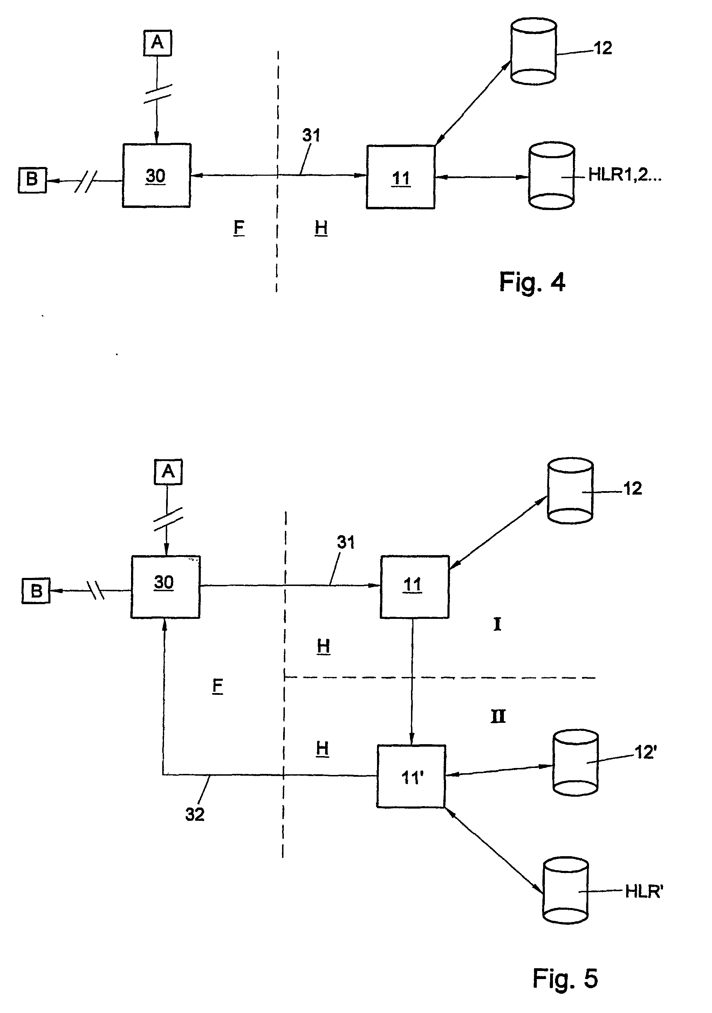

If a routing enquiry is received from an exchange of another network, for instance a foreign network, the exchange 11 can forward the routing information obtained in the manner described above to the foreign exchange, which can then proceed to establish the connection with the target subscriber in the most optimal manner. An example is shown schematically in Fig. 4. An exchange 30 in a foreign country F transmits via link 31 an enquiry for routing information to an exchange 11 in the home country H. The exchange 11 obtains the requested information via the special memory device 12 and a location register HLR, and transmits the information via link 31 back to the exchange 30. Exchange 30 then proceeds to establish, directly or indirectly, the connection between subscriber A and the target subscriber B.

Fig. 5 schematically shows an example of a variant in which a foreign exchange 30 asks an exchange 11 of network I in the home country H for routing information. A search in the special memory device 12 shows that the target subscriber has switched to network II in the home country H. Exchange 11 therefore forwards the enquiry for routing information to exchange 11' of network II, which, via the special memory device 12' and the location register HLR', composes the requested information and proceeds to forward same via a direct connection 32 to the enquiring exchange 30 abroad.

It is noted that, technically speaking, it is not relevant whether the exchanges 30 and 11 are located in different countries or not, or whether the exchanges 11 and 11' are located in the same country or not.

Obviously, the exchange 11' could also send the requested routing information to the foreign exchange 30 via the exchange 11 of network I.

In a similar manner to that described above, so-called SMS (=Short Message Service) messages can be transmitted. In that event, the gateway exchange, in the case where the target subscriber is a subscriber belonging to the exchange's own network (whether or not ported in), can forward the SMS signal, either directly or via the enquiring exchange, to the exchange operating the target subscriber.

If a switched (ported-out) subscriber is involved, it is also possible, after the correct HLR has-been found in the second network, to forward the requested information via the gateway exchange of the first network, directly or via the enquiring exchange, whether foreign or not, to the exchange operating the target subscriber. Also, alternatively, the gateway exchange of the second network could send the requested information to the enquiring exchange, or directly to the exchange operating the subscriber.

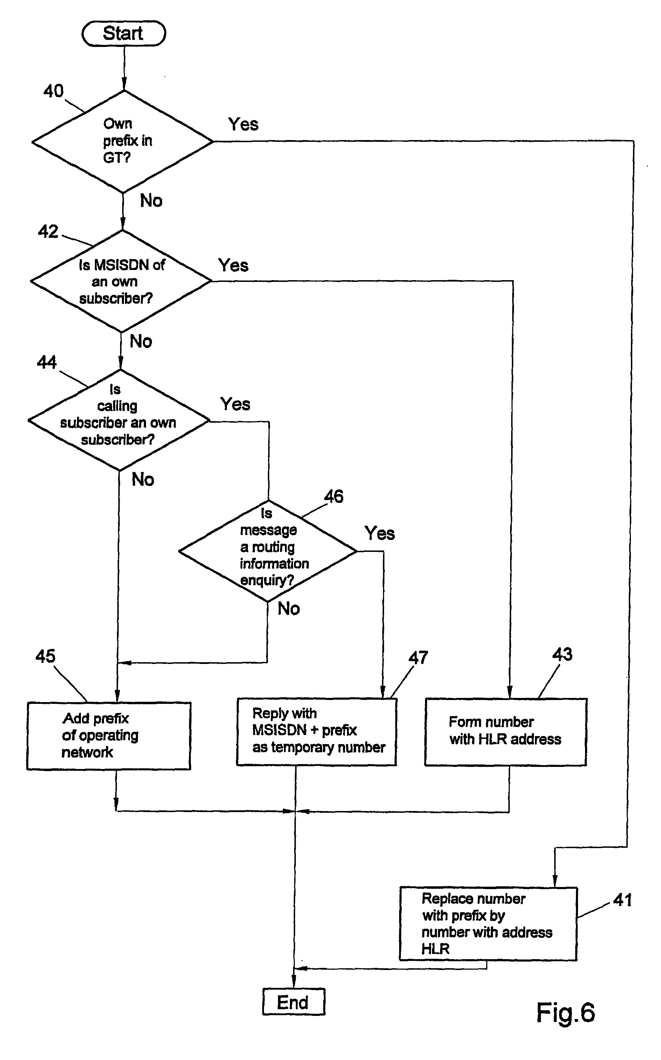

For the sake of completeness, Fig. 6 shows, in the form of a flow diagram, an example of the operation of the special memory device 12. Upon entry of a call signal, it is first assessed in step 40 whether the address number (the "global title") contains the prefix of the network itself. If so, the global title is replaced by a number indicating the relevant HLR (step 41). If not, it is assessed in step 42 whether the MSISDN number (Mobile Subscriber ISDN) contained in the received title belongs to a subscriber of the network itself. If so, a number is formed with the address of the relevant HLR (step 43). If not, it is assessed in step 44 whether the calling subscriber is operated by the network itself. If not, the prefix of the operating network is added to the MSISDN number (step 45). If so, it is assessed in step 46 whether the received message is a routing information enquiry. If so, in step 47, the MSISDN number provided with a prefix is formed as a temporary number and transmitted. If not, the process continues with step 45.

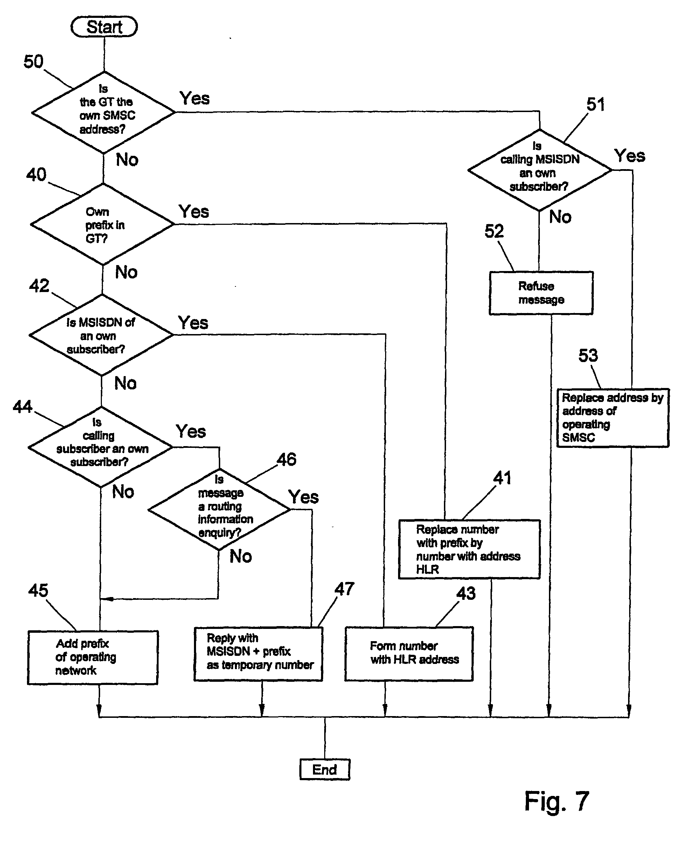

Fig. 7 shows a flow diagram which is similar to Fig. 6, but utilizes a blocking of SMS messages not originating from a subscriber of the network itself. To that end, in this example, in step 50, it is first determined whether the received message is an SMS message intended for the SMS exchange of the network itself. If so, it is determined in step 51 whether the calling MSISDN number is a number of a subscriber of the network itself. If not, the message is refused (step 52), because this subscriber is not entitled to use the "short message service" of this network. This is reported to the calling number. If so, the message is provided with the address of the operating SMS exchange (step 53).

With the above-described method, a call for a mobile subscriber can be processed independently of whether or not the mobile subscriber is a subscriber of the network itself, or is a ported-in or ported-out subscriber having a ported number. Also, with this method, it is no longer necessary to have a certain coupling between, for instance, the telephone, facsimile and data traffic numbers of a subscriber, as was often the case heretofore. Even if the subscriber were to switch his telephone number from a first operator to a second operator, and switch his fax number to a third operator, this would not pose any problem.

It is noted further that calls from mobile apparatus to fixed destinations with or without ported numbers can also be correctly routed with the method and the special memory device according to the invention.

## Claims

1. A method for processing calls for mobile communication equipment with subscriber numbers including subscriber numbers ported from a first mobile communication network (I) for mobile communication of a first operator to a second mobile communication network (II) for mobile communication of a second operator, wherein each mobile communication network (I,II) comprises at least one location register (HLR1, HLR2, HLR') and wherein in each mobile communication network (I,II) a database of ported numbers, ported in or ported out, is formed, which is accessible from at least one gateway exchange (11,11'), and in which the subscriber numbers ported from one operator to another operator are stored together with information about the network (I,II) to which the subscriber numbers belong wherein upon an incoming call at the network (I,II) for a particular subscriber number, the called subscriber number is compared with the subscriber numbers in the database and on the basis of the result of that comparison, routing information for the further processing of the call is composed, wherein such routing information is used to access the location register wherein information of the called subscriber number is stored.

2. A method according to claim 1, **characterized in that** the routing information contains either the address of the relevant location register (HLR1, HLR2, HLR') if the called subscriber number belongs to one of said networks (I,II) which is accessed by the incoming call or the address of another one of said mobile communication networks (I,II) if the called subscriber number belongs to this other one of said mobile communication networks (I,II) and this other one of said mobile communication networks (I,II) differs from the mobile communication network (I,II) which is accessed by the incoming call, respectively.

3. A method according to claim 2, **characterized in that** the routing information is either forwarded via the gateway exchange (11,11') to the relevant location register (HLR1, HLR2, HLR') or to the other one of said networks (I,II), respectively.

4. A method according to claim 2 or 3, **characterized in that** the relevant location register (HLR1, HLR2, HLR') completes the routing information and that a temporary subscriber number is assigned to the call, which is transmitted via the gateway exchange (11,11',30) to an exchange (11,11',30) in the area where the mobile equipment is located.

5. A method according to any one of the preceding claims 2-4, **characterized in that** the routing information which is provided with the address of the other one of said mobile communication networks (I,II) is transmitted to this other one of said mobile communication networks (I,II) and in this other one of said mobile communication networks (I,II), after comparison with the database of the ported numbers, the routing information is completed and then transmitted back to the gateway exchange (11,11',30) of this other one of said mobile communication networks (I,II).

6. A method according to any one of claims 2-4, **characterized in that** the routing information provided with the address of this other one of said mobile communication networks (I,II) is transmitted to this other one of said mobile communication networks (I,II) and in this other one of said mobile communication networks (I,II), after comparison with the database of ported numbers, the routing information is completed and then transmitted directly to an operating network or an operating exchange (11,11').

7. A communication system comprising a first mobile communication network provided with at least one location register (HLR1,HLR2), a number of exchanges (11,30) and mobile communication equipment provided with subscriber numbers, including subscriber numbers belonging to the first mobile communication network (I) and subscriber numbers belonging to other mobile communication networks (II) than the first mobile communication network, wherein the first mobile communication network (I) comprises at least one memory device (12), which is accessible from at least one gateway exchange (11,30) and which contains a database of ported numbers, ported in or ported out, in which the subscriber numbers ported from one operator to another operator are stored together with information about the mobile communication networks (II) to which the subscriber numbers belong, and that the gateway exchange (11,30) is arranged to compare a called subscriber number with the database of ported numbers and, depending on the result of the comparison, to determine whether the call is intended for a subscriber number belonging to the first mobile communication network (I) or one of said other mobile communication networks (II), wherein the memory device (12) is arranged, in the case of a subscriber number belonging to the first mobile communication network (I), to furnish to the gateway exchange (11,30) the address of a location register (HLR1,HLR2) relevant to the subscriber number, and wherein the memory device (12) is further arranged, in the case of a subscriber number belonging to one of said other mobile communication networks (II), to form a temporary number which indicates by which other communication network (II) the subscriber number is operated.

8. A communication system according to claim 7, **characterized in that** the system is provided with a short message service (SMS), wherein the memory device (12) is arranged to detect whether an SMS message originates from a subscriber of the first mobile communication network (I) or from a subscriber of one of said other mobile communication networks (II).

9. A communication system according to claim 8, **characterized by** blocking means for blocking an SMS message originating from a subscriber belonging to one of said other communication networks (II).

## Patentansprüche

1. Verfahren zum Verarbeiten von Anrufen für Mobilkommunikationsausrüstung mit Teilnehmernummern, die Teilnehmernummern umfassen, welche von einem ersten Mobilkommunikationsnetz (I) für Mobilkommunikation eines ersten Betreibers an ein zweites Mobilkommunikationsnetz (II) für Mobilkommunikation eines zweiten Betreibers übertragen werden, wobei jedes Mobilkommunikationsnetz (I, II) wenigstens ein Ortsregister (HLR1, HLR2, HLR=) aufweist und wobei in jedem Mobilkommunikationsnetz (I, II) eine Datenbank in das oder aus dem Netz übertragener Nummern, gebildet ist, welche über wenigstens ein Knotenamt (11, 11') zugängig ist, und in welche die von einem Betreiber an einen anderen Betreiber übertragenen Teilnehmernummern zusammen mit Informationen über das Netz (I, II) gespeichert werden, zu dem die Teilnehmernummern gehören, wobei bei einem in dem Netz (I, II) für eine bestimmte Teilnehmernummer eingehenden Anruf, die angerufene Teilnehmernummer mit den Teilnehmernummern in der Datenbank verglichen wird, und auf der Basis des Vergleichsergebnisses Weiterleitungsinformationen für die weitere Verarbeitung des Anrufs zusammengestellt werden, wobei die Weiterleitungsinformationen für den Zugriff auf das Ortsregister verwendet werden, in dem Informationen über die angerufene Teilnehmernummer gespeichert sind.

2. Verfahren nach Anspruch 1, **dadurch gekennzeichnet, daß** die Weiterleitungsinformationen entweder die Adresse des relevanten Ortsregisters (HLR1, HLR2, HLR=) enthalten, wenn die angerufene Teilnehmernummer zu einem der Netze (I, II) gehört, auf welches der eingehende Anruf zugreift, oder die Adresse eines anderen der Mobilkommunikationsnetze (I, II) enthalten, wenn die angerufene Teilnehmernummer zu diesem anderen der Mobilkommunikationsnetze (I, II) gehört und dieses andere der Mobilkommunikationsnetze (I, II) von dem Mobilkommunikationsnetz (I, II) verschieden ist, auf das der eingehende Anruf zugreift.

3. Verfahren nach Anspruch 2, **dadurch gekennzeichnet, daß** die Weiterleitungsinformationen entweder über das Knotenamt (11, 11') an das betreffende Ortsregister (HLR1, HLR2, HLR=) oder an das andere der Netze (I, II) weitergeleitet werden.

4. Verfahren nach Anspruch 2 oder 3, **dadurch gekennzeichnet, daß** das betreffende Ortsregister (HLR1, HLR2, HLR=) die Weiterleitungsinformationen vervollständigt, und daß dem Anruf eine temporäre Teilnehmernummer zugewiesen wird, welche über das Knotenamt (11, 11'; 30) an ein Amt (11, 11'; 30) in dem Bereich geleitet wird, in dem sich die mobile Ausrüstung befindet.

5. Verfahren nach einem der vorhergehenden Ansprüche 2-4, **dadurch gekennzeichnet, daß** die Weiterleitungsinformationen, die mit der Adresse des anderen der Mobilkommunikationsnetze (I, II) versehen sind, an dieses andere der Mobilkommunikationsnetze (I, II) übertragen werden und die Weiterleitungsinformationen in diesem anderen der Mobilkommunikationsnetze (I, II) nach einem Vergleich mit der Datenbank der übertragenen Nummern vervollständigt und anschließend zum Knotenamt (11, 11'; 30) des anderen der Mobilkommunikationsnetze (I, II) zurück übertragen werden.

6. Verfahren nach einem der Ansprüche 2-4, **dadurch gekennzeichnet, daß** die Weiterleitungsinformationen, die mit der Adresse des anderen der Mobilkommunikationsnetze (I, II) versehen sind, an dieses andere der Mobilkommunikationsnetze (I, II) übertragen werden und die Weiterleitungsinformationen in diesem anderen der Mobilkommunikationsnetze (I, II) nach einem Vergleich mit der Datenbank der übertragenen Nummern vervollständigt und anschließend direkt an ein Betreibernetz oder ein Betreiberamt (11, 11') übertragen werden.

7. Kommunikationssystem mit einem ersten Mobilkommunikationsnetz, das mit wenigstens einem Ortsregister (HLR1, HLR2), einer Anzahl von Ämtern (11, 30) und mobilen Ausrüstungen versehen ist, die Teilnehmernummern aufweisen, welche Teilnehmernummern, die zum ersten Mobilkommunikationsnetz (I) gehören, und Teilnehmernummern umfassen, die zu anderen Mobilkommunikationsnetzen (II) als dem ersten Mobilkommunikationsnetz gehören, wobei das erste Mobilkommunikationsnetz (I) wenigstens eine Speichervorrichtung (12) aufweist, die über wenigstens ein Knotenamt (11, 30) zugängig ist und eine Datenbank von in das und aus dem Netz übertragenen Nummern enthält, in der von einem Betreiber zu einem andere Betreiber übertragene Teilnehmernummern zusammen mit Informationen über die Netze (II), zu denen die Teilnehmernummern gehören, gespeichert sind, und daß das Knotenamt (11, 30) derart ausgebildet ist, daß es eine angerufene Teilnehmernummer mit der Datenbank der übertragenen Nummern vergleicht und abhängig von den Vergleichsergebnissen festzustellen, ob der Anruf für eine Teilnehmernummer bestimmt ist, die zu dem ersten Mobilkommunikationsnetz (I) oder einem der anderen Mobilkommunikationsnetze (II) gehört, wobei die Speichervorrichtung (12) derart ausgebildet ist, daß sie im Falle einer zum ersten Mobilkommunikationsnetz (I) gehörenden Teilnehmernummer dem Knotenamt (11, 30) die Adresse eines die Teilnehmernummer betreffenden Ortsregisters (HRL1, HRL2) liefert, und wobei die Speichervorrichtung (12) ferner derart ausgebildet ist, daß sie im Falle einer zu einem anderen der Mobilkommunikationsnetze (II) eine temporäre Nummer bildet, welche angibt, über welches andere Kommunikatonsnetz (II) die teilnehmernummer betrieben wird.

8. Kommunikatonssystem nach Anspruch 7, **dadurch gekennzeichnet, daß** das System mit einem Short-Message-Service (SMS) versehen ist, wobei die Speichervorrichtung (12) derart ausgebildet ist, daß sie erkennt, ob eine SMS-Nachricht von einem Teilnehmer des ersten Mobilkommunikationsnetzes (I) oder von einem Teilnehmer eines anderen Mobilkommunikationsnetzes (II) stammt.

9. Kommunikationssystem nach Anspruch 8, **gekennzeichnet durch** Sperreinrichtungen zum Sperren einer SMS-Nachricht, die von einem Teilnehmer eines anderen Mobilkommunkationsnetzes (II) stammt.

## Revendications

1. Procédé de traitement de communications pour équipements de télécommunications mobiles avec des numéros d'abonnés comportant des numéros d'abonnés, qui sont transportés d'un premier réseau de télécommunications mobiles (I) assurant les télécommunications mobiles d'un premier opérateur à un deuxième réseau de télécommunications mobiles (II) assurant les télécommunications mobiles d'un deuxième opérateur, où chaque réseau de télécommunications mobiles (I, II) comprend au moins un registre d'emplacements (HLR1, HLR2, HLR') et où, dans chaque réseau de télécommunications mobiles (I, II), est formée une base de données de numéros transportés, importés ou exportés, qui est accessible depuis au moins un central (11, 11') d'une passerelle, et dans laquelle les numéros d'abonnés transportés d'un opérateur à un autre opérateur sont stockés avec des informations concernant le réseau (I, II) auquel appartiennent les numéros d'abonnés, où, lors d'une communication entrante faite dans le réseau (I, II) relatif à un numéro d'abonné particulier, le numéro d'abonné est comparé avec les numéros d'abonnés compris dans la base de données et, sur la base du résultat de cette comparaison, des informations d'acheminement relatives à la poursuite du traitement de la communication sont composées, où ses informations d'acheminement sont utilisées pour faire accès au registre d'emplacements, où sont stockées des informations relatives au numéro d'abonné demandé.

2. Procédé selon la revendication 1, **caractérisé en ce que** les informations d'acheminement contiennent ou bien l'adresse du registre d'emplacements voulu (HLR1, HLR2, HLR') si le numéro d'abonné appelé appartient à l'un desdits réseaux (I, II) qui fait l'objet d'un accès par la communication entrante ou bien l'adresse d'un autre desdits réseaux de télécommunications mobiles (I, II) si le numéro d'abonné appelé appartient à l'autre desdits réseaux de télécommunications mobiles (I, II) et l'autre desdits réseaux de télécommunications mobiles (I, II) diffère du réseau de télécommunications mobiles (I, II) qui fait l'objet d'un accès par la communication entrante, respectivement.

3. Procédé selon la revendication 2, **caractérisé en ce que** les informations d'acheminement sont ou bien retransmises, via le central (11, 11') de la passerelle, au registre d'emplacements approprié (HLR1, HLR2, HLR') ou bien à l'autre desdits réseaux (I, II), respectivement.

4. Procédé selon la revendication 2 ou 3, **caractérisé en ce que** le registre d'emplacements approprié (HLR1, HLR2, HLR') termine les informations d'acheminement et **en ce qu'**un numéro d'abonné temporaire est attribué à la communication, qui est transmise via le central (11, 11', 30), de la passerelle à un central (11, 11', 30) se trouvant dans la zone où les équipements mobiles sont placés.

5. Procédé selon l'une quelconque des revendications 2 à 4, **caractérisé en ce que** les informations d'acheminement, qui sont fournies avec l'adresse de l'autre desdits réseaux de télécommunications mobiles (I, II), sont transmises à l'autre desdits réseaux de télécommunications mobiles (I, II) et, dans l'autre desdits réseaux de télécommunications mobiles (I, II), après comparaison avec la base de données des numéros transportés, les informations d'acheminement sont terminées, puis sont réémises à destination du central (11, 11', 30) de la passerelle de l'autre desdits réseaux de télécommunications mobiles (I, II).

6. Procédé selon l'une quelconque des revendications 2 à 4, **caractérisé en ce que** les informations d'acheminement fournies avec l'adresse de l'autre desdits réseaux de télécommunications mobiles (I, II) sont transmises à l'autre desdits réseaux de télécommunications mobiles (I, II) et, dans l'autre desdits réseaux de télécommunications mobiles (I, II), après comparaison avec la base de données de numéros transportés, les informations d'acheminement sont terminées, puis sont émises directement à destination d'un réseau en fonctionnement ou d'un central en fonctionnement (11, 11').

7. Système de télécommunications comprenant un premier réseau de télécommunications mobiles doté d'au moins un registre d'emplacements (HLR1, HLR2), un certain nombre de centraux (11, 30) et des équipements de télécommunications mobiles dotés de numéros d'abonnés, comportant des numéros d'abonnés qui appartiennent au premier réseau de télécommunications mobiles (I) et des numéros d'abonnés qui appartiennent à d'autres réseaux de télécommunications mobiles (II), qui ne sont pas le premier réseau de télécommunications mobiles, où le premier réseau de télécommunications mobiles (I) comprend au moins un dispositif de mémorisation (12), qui est accessible depuis au moins un central (11, 30) d'une passerelle et qui contient une base de données de numéros transportés, importés ou exportés, dans laquelle les numéros d'abonnés transportés d'un opérateur à un autre opérateur sont stockés en même temps que les informations relatives aux réseaux de télécommunications mobiles (II), auxquels appartiennent les numéros d'abonnés, et le central (11, 30) de la passerelle est conçu pour comparer un numéro d'abonné appelé avec la base de données de numéros transportés et, en fonction du résultat de la comparaison, déterminer si la communication est destinée à un numéro d'abonné appartenant au premier réseau de télécommunications mobiles (I) ou à l'un desdits autres réseaux de télécommunications mobiles (II), où le dispositif de mémorisation est conçu, dans le cas d'un numéro d'abonné appartenant au premier réseau de télécommunications mobiles (I), pour fournir au central (11, 30) de la passerelle l'adresse d'un registre d'emplacements (HLR1, HLR2) relatif au numéro d'abonné, et où le dispositif de mémorisation (12) est en outre conçu, dans le cas d'un numéro d'abonné appartenant à l'un desdits autres réseaux de télécommunications mobiles (II), pour former un numéro temporaire qui indique par quel autre réseau de télécommunications (II) le numéro d'abonné est traité.

8. Système de télécommunications selon la revendication 7, **caractérisé en ce que** le système est doté d'un service de messages courts (SMS), où le dispositif de mémorisation (12) est conçu pour détecter si un message SMS vient d'un abonné du premier réseau de télécommunications mobiles (I) ou d'un abonné de l'un desdits autres réseaux de télécommunications mobiles (II).

9. Système de télécommunications selon la revendication 8, **caractérisé par** un moyen de blocage servant à bloquer un message SMS venant d'un abonné appartenant à l'un desdits autres réseaux de télécommunications (II).
